# NEUE EUROPÄISCHE PATENTSCHRIFT

(11) **EP 1 991 501 B2**
(45) Veröffentlichungstag und Bekanntmachung des Hinweises auf die Entscheidung über den Einspruch: **17.02.2016**
(45) Hinweis auf die Patenterteilung: 22.12.2010
(21) Anmeldenummer: 07712268.7
(22) Anmeldetag: 21.02.2007
(51) Int. Cl.: C01B 33/107

(54) **WIEDERVERWERTUNG VON HOCHSIEDENDEN VERBINDUNGEN INNERHALB EINES CHLORSILANVERBUNDES**
RECYCLING OF HIGH-BOILING COMPOUNDS WITHIN AN INTEGRATED CHLOROSILANE SYSTEM
RECYCLAGE DE COMPOSES A POINT D'EBULLITION ELEVE COMPRENANT UN GROUPEMENT CHLOROSILANE

(30) Priorität: 03.03.2006 DE 102006009954
(43) Veröffentlichungstag der Anmeldung: 19.11.2008
(73) Patentinhaber: Wacker Chemie AG, 81737 München (DE)
(72) Erfinder: FABRY, Laszlo, 84489 Burghausen (DE); PÄTZOLD, Uwe, 84489 Burghausen (DE); STEPP, Michael, A-5122 Überackern (AT)
(74) Vertreter: Potten, Holger
(86) Internationale Anmeldenummer: PCT/EP2007/051664
(87) Internationale Veröffentlichungsnummer: WO 2007/101789

(56) Entgegenhaltungen:
- EP-A- 0 921 098
- EP-A- 1 262 483
- EP-A- 1 586 537
- EP-A1- 1 249 453
- DE-A1- 3 311 650
- DE-A1- 3 503 262
- DE-A1- 3 709 577

## Beschreibung

Die Erfindung betrifft ein Verfahren zur Wiederverwertung von hochsiedenden Verbindungen innerhalb eines Chlorsilanverbundes.

In den verschiedenen Teilprozessen der Erzeugung von polykristallinem Silicium entstehen unterschiedliche Chlorsilanverbindungen, u. a. hochsiedende Di- und Oligochlorsilane (HS). Der Begriff "hochsiedende Verbindung, hochsiedendes Di- und Oligochlorsilan" oder "Hochsieder" bezeichnet dabei eine Verbindung, welche aus Silicium, Chlor, ggf. Wasserstoff, Sauerstoff und Kohlenstoff besteht und einen höheren Siedepunkt als Tetrachlorsilan (57°C/bei 1013 hPa) aufweist. Bevorzugt handelt es sich um Disilane HₙC₁₆₋ₙSi₂ (n= 0 - 4) und höhere Oligo(chlor)silane vorzugsweise mit 2 bis 4 Si Atomen sowie Disiloxane HₙCl₆₋ₙSi₂O (n= 0 - 4) und höhere Siloxane vorzugsweise mit 2 bis 4 Si Atomen einschließlich zyklischer Oligosiloxane sowie deren Methylderivate. Im Folgenden werden niedersiedende Silane mit einem Siedepunkt < 40°C unter atmosphärischen Bedingungen (1013 hPa) als NS abgekürzt.

Sowohl die Synthese von Trichlorsilan (TCS) aus metallurgischem Silicium und HCl als auch die Abscheidung von polykristallinem Silicium (Poly) aus Trichlorsilan beruhen auf thermischen Gleichgewichtsprozessen von Chlorsilanen, wie sie beispielsweise in E. Sirtl, K. Reuschel, Z. anorg. allg. Chem. 332, 113-216, 1964 oder L.P. Hunt, E. Sirtl, J. Electrochem. Soc. 119(12), 1741-1745, 1972 beschrieben sind. In der Trichlorsilan-Synthese entstehen demnach neben Trichlorsilan und Siliciumtetrachlorid (STC) auch Di- und Monochlorsilane, sowie HS einem thermischen Gleichgewicht entsprechend. Das Roh-Trichlorsilan aus der Trichlorsilan-Synthese enthält 0,05 - 5 % dieser HS. Außerdem entstehen in der Roh-Trichlorsilan-Erzeugung etwa 20 ppm an verschiedenen Bor-Verbindungen, bis zu 200 ppm TiCl₄ und einschließlich anderer Metallchloride, wie z. B. FeCl₂, FeCl₃ und AlCl₃. Diese müssen von den Produkten Trichlorsilan und Siliciumtetrachlorid abgetrennt werden.

Verfahren zur Abtrennung von Trichlorsilan und Siliciumtetrachlorid von o. g. HS sind bekannt. So beschreiben US 5,252,307, US 5,080,804, US 4,690,810 oder US 4,252,780 das Aufkonzentrieren der mit Metallchloriden verunreinigten HS-Fraktionen im Blasenabzug auf 1 Gew.% - 50 Gew.%, die anschließende Hydrolyse und die Entsorgung als Hydrolyserückstand. Diese Verfahren verursachen Silicium- und Chlorverluste sowie Entsorgungsprobleme des Hydrolysates und der anfallenden salzsauren Abwässer [M.G. Kroupa in Proceedings Silicon for the Chemical Industry VI, pp. 201-207, Loen, Norwegen, 17-21. Juni 2002].

Weitere unerwünschte hochsiedende Chlordisiloxane-Fraktionen entstehen bei der Destillation und teilhydrolytischen Reinigung von Chlorsilanen. Diese Hochsiederfraktionen werden bisher ebenfalls als Hydrolyserückstände sowie salzsaure Abwässer entsorgt, wie z. B. in US 6,344,578 B1, US 3,540,861 oder US 4,374,110 beschrieben.

Es ist ferner sowohl theoretisch abgeleitet [E. Sirtl, K. Reuschel, Z. anorg. allg. Chem. 332, 113-216, 1964; E. Sirtl et al., J. Electrochem. Soc. 121, 919-, 1974; V. F. Kochubei et al., Kinet. Katal., 19(4), 1084, 1978], als auch analytisch nachgewiesen [V.S. Ban et al., J. Electrochem. Soc. 122, 1382-, 1975], dass HS (Hexa-, Penta-, Tetra- und Trichlordisilan) auch bei der Abscheidung von polykristallinem Silicium aus Trichlorsilan entstehen. Diese, im Bezug auf Dotierstoffe und Metalle, hochreinen HS befinden sich im Blasenabzug der Polykondensat-Destillation, die mit Siliciumtetrachlorid bei 600 - 1200°C konvertiert werden kann [WO02/100776 A1].

HS können auch in einer Niedertemperatur-Konvertierung im WirbelbettReaktor in der Gegenwart von Wasserstoff gespalten werden [JPHeil-188414-Osaka Titanium 1988].

Polychlorsilane (SiₙCl₂ₙ₊₂; 4≥n≥2), insbesondere Si₂Cl₆ (HCDS), zerfallen bei ≥700°C in der Gegenwart von Siliciumkristallkeimen bzw. an einer geheizten Siliciumseele [EP282037-Mitsubishi 1988]. Es ist ferner bekannt, dass aus den Abgasen der Abscheidung von polykristallinem Silicium hochreines HCDS isoliert werden kann [WO2002012122-Mitsubishi, 2002]. Mit HCl kann die Spaltung von Polychlordisilanen an Aktivkohle bereits zwischen 30 und 150°C vor sich gehen [JP09-263405-Tokuyama 1996]. Die Umsetzung dieser HS-Fraktion zusammen mit Siliciumtetrachlorid und Wasserstoff kann in einem Hochtemperaturreaktor erfolgen (Dow Corning 2001 [US2002/0187096]). Disilane aus der siliciumorganischen Direktsynthese können bei 300°C ebenfalls zu Trichlorsilan und/oder Siliciumtetrachlorid konvertiert werden [US 6,344,578 B1 Wacker 2000]. Niedertemperatur-Spaltung erfolgt in der Gegenwart von nukleophilen Katalysatoren [F. Hoefler et al., Z. anorg. allg. Chem. 428, 75-82, 1977; DE3503262-Wacker 1985; G. Laroze et al, Proceedings Silicon for the Chemical Industry III, pp. 297-307, Trondheim, Norwegen, 1996; W.-W. du Mont et al, Organosilicon Chemistry V, Sept 2001, Chem. Abst., 142:155991; G. Roewer et al., Silicon cabide - a survey in Structure and Bonding 101, pp. 69-71, Springer 2002]. Lewis-Säuren wie AlCl₃ können die Si-Si Spaltung ebenfalls katalysieren [A. Gupper et al., Eur. J. Inorg. Chem,8, 2007-2011, 2001].

EP 1 262 483 A offenbart ein Verfahren zur Herstellung von Silanen aus Chlorwasserstoffgas und Reaktionspartnern, die aus Siliciummetall und Di- und Oligosilanen, also aus hochsiedenden Verbindungen ausgewählt werden (Seite 2, Spalte 1, Linie 1 zu Spalte 2, Linie 53).

EP 1 249 453 A1 beschreibt ein kontinuierliches Verfahren zur Direktsynthese von Silanen der allgemeinen Formel (1) RₐSiCl₄₋ₐ durch Umsetzung von feinteiligem Siliciummetall mit R-Cl in Wirbelschicht (wobei a = 0, 1, 2, 3 oder 4 und R = Wasserstoff, Methyl oder Ethyl).

Alle diese Verfahren zum Entfernen von unerwünschten HS aus Prozessen zur Gewinnung von polykristallinem Silicium beinhalten einen hohen technischen Aufwand für die Entsorgungs-, Trenn- und Reinigungsschritte. Zudem lassen sich Verluste an Chlor und Silicium nicht vermeiden.

Die thermische Zersetzung von HS in der Anwesenheit von Siliciumtetrachlorid und Wasserstoff ist aus JPHeil-188414 der Fa. Osaka Titanium bekannt.

Die vorliegende Erfindung betrifft ein Verfahren zur Herstellung von Trichlorsilan durch Umsetzung von metallurgischem Silicium und HCl in einem Wirbelschichtreaktor bei einer Temperatur von 290°C bis 400°C, welches dadurch gekennzeichnet ist, dass eine hochsiedende Verbindung in den Wirbelschichtreaktor eingespeist wird.

Die HS stammen vorzugsweise aus den Abgasen, die bei der Herstellung von polykristallinem Silicium oder bei der Herstellung von Trichlorsilan entstehen. Das erfindungsgemäße Verfahren ermöglicht damit eine Erhöhung der Trichlorsilan Ausbeute bei der Herstellung im Wirbelschichtreaktor und eine kostengünstige Wiederverwertung von HS. Es minimiert die Silicium-Verluste und entlastet die Umwelt durch Reduzierung des Deponiebedarfes und sauerer Hydrolysat-Produkte.

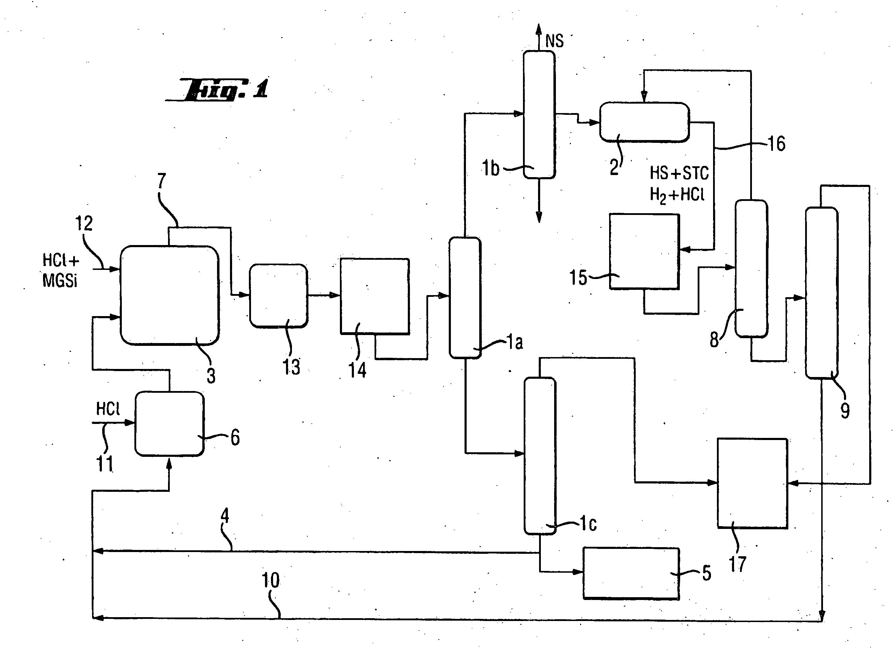

Fig. 1 zeigt beispielhaft einen Chlorsilanverbund umfassend eine Ausführungsform der erfindungsgemäße Rückführung (4/10) der HS aus den Abgasen, die bei der Herstellung von Trichlorsilan in einem Wirbelschichtreaktor (3) oder bei der Herstellung von polykristallinem Silicium (Abscheidung 2) entstehen.

Die Abgase (7) aus dem Wirbelschichtreaktor (3) werden dabei über ein Staubabtrennungssystem, in der Regel ein Staubfilter (13) und ein Kondensationssystem (14), in eine Trennkolonne (1a und 1b) gegeben, wo Trichlorsilan und NS von Siliciumtetrachlorid und HS getrennt werden. Siliciumtetrachlorid und HS werden in eine Hochsiederkolonne (1c) gegeben, wo Siliciumtetrachlorid zum Teil von den HS abgetrennt wird. In einer Ausführungsform des erfindungsgemäßen Verfahrens wird nun das HS haltige Gemisch mit einem atmosphärischem Siedepunkt von 80 - 155°C in einen Wirbelschichtreaktor (3) zur Herstellung von Trichlorsilan innerhalb des Chlorsilanverbundes zurückgeführt (4).

In einer anderen Ausführungsform des erfindungsgemäßen Verfahrens wird das Abgas, welches aus der Abscheidung (2) zur Herstellung von polykristallinem Silicium stammt, in einen Wirbelschichtreaktor (3) zur Herstellung von Trichlorsilan innerhalb des Chlorsilanverbundes zurückgeführt. Das Abgas der Abscheidung wird vorzugsweise über ein Kondensationssystem (15) in eine Polykondensatkolonne (8) geführt, in der Siliciumtetrachlorid und HS von Trichlorsilan und NS getrennt werden. Siliciumtetrachlorid und HS werden wiederum in eine HS Anreicherungskolonne (9) gegeben, in der Siliciumtetrachlorid zum Teil von HS abgetrennt wird. Das hierbei entstehende HS Gemisch wird erfindungsgemäß in den Wirbelschichtreaktor (3) zur Herstellung von Trichlorsilan zurückgeführt (10). Es ist ebenso möglich, ein Abgasgemisch beider Ausführungsformen des erfindungsgemäßen Verfahrens in den Wirbelschichtreaktor zur Herstellung von Trichlorsilan zurückzuführen. Es zeigte sich überraschend, dass die HS-haltigen Gemische in einem Wirbelschichtreaktor (3) mit metallischem Silicum zu Trichlorsilan reagieren.

In der erstgenannten Verfahrensvariante erfolgt eine Rückführung der HS-Fraktion (4) vorzugsweise aus dem unteren Seitenabzug der HS-Destillation (1c) in einen Trichlorsilan Wirbelschichtreaktor (3). Vorzugsweise wird ein Teil (1 - 50 %) der HS-Fraktion aus dem unteren Seitenabzug der HS-Destillation (1c) der HS-Vernichtung (5) zugeführt, um eine Erhöhung der Siliciumtetrachlorid- bzw. TiCl₄- und AlCl₃ bzw. anderer Metallchloride sowie Siloxan-Pegel im Wirbelschichtreaktor 3 zu vermeiden. Damit werden vorzugsweise 50 - 99 Gew.% der HS-Fraktion mit einem atmosphärischen Siedepunkt von 80 - 155°C aus dem unteren Seitenabzug der Hochsiederdestillation (1c) in einen Trichlorsilan-Wirbelschichtreaktor (3) zurückgeleitet. Das zurückgeführte HS-Gemisch enthält auch Siliciumtetrachlorid (< 50 %) und o. g. Metallchloride in einer Konzentration < 5000 ppm. Diese Variante des erfindungsgemäßen Verfahrens reduziert die Entsorgung zur HS-Vernichtung umweltschonend um 50 - 99 Gew.% und erhöht die Trichlorsilan-Roherzeugung um bis zu 1 Gew.%.

Auch im Abgas (16) eines Abscheidereaktors (2) zur Herstellung von polykristallinem Silicium aus Trichlorsilan befinden sich HS neben Monochlorsilan, Monosilan, Dichlorsilan, Trichlorsilan und Siliciumtetrachlorid. Nachdem Trichlorsilan und Siliciumtetrachlorid z. T. in der Polykondensatkolonne (8) destillativ abgetrennt werden, konzentrieren sich die HS im Rückstand auf 0,5 - 20 Gew.%. Diese HS werden als Blasenprodukt der Polykondensatkolonne (8) in einer Fraktion bei Normaldruck und einer Temperatur von 80 - 155°C gewonnen. Ggf. kann das HS-Gemisch in einer Anreicherungskolonne (9) bis 50 % HS aufkonzentriert werden.

Es zeigte sich nun, dass auch diese HS-haltige Fraktion (10) im Trichlorsilan-Wirbelschichtreaktor (3) problemlos in Trichlorsilan und in Siliciumtetrachlorid gespaltet werden kann. Da diese HS-Fraktion neben HS auch Siliciumtetrachlorid enthält aber bzgl. Dotierstoffen, Kohlenstoff- und Metallverbindungen in einer sehr hohen Reinheit anfällt, kann diese Fraktion direkt in den Wirbelschichtreaktor (3) rückgeführt werden. Nach der Rückführung (10) in den Wirbelschichtreaktor (3) wurde keine Anreicherung an HS im Abgas (7) des Wirbelschichtofens (3) festgestellt. Diese Variante des erfindungsgemäßen Verfahrens ermöglicht eine 100 %ige Wiederverwertung der HS aus dem Abgas (16) der Abscheidung von polykristallinem Silicium, eine umweltbelastende Entsorgung ist damit nicht mehr notwendig. Zudem wird die Ausbeute in der Trichlorsilan-Roherzeugung mindestens um 2 Gew% erhöht.

In dem Prozess fällt Siliciumtetrachlorid als hochreines Kopfprodukt an der HS-Anreicherungskolonne (9) sowie an der HS-Kolonne (1c) an. Dieses Siliciumtetrachlorid kann entweder in einem Konverter (17) mit Wasserstoff zu Trichlorsilan konvertiert (DE 3024319) oder in einer Flamme zu hochdisperser Kieselsäure (HDK®, 17) pyrolysiert (DE4322804) werden, wie T: Lovreyer and K. Hesse beschrieben (T. Lobreyer at al. im Proceedings von Silicon for the Chemical Industry IV, in Geiranger, Norwegen, 3.-5.6.1998, pp.93-100 Ed.: H.A. Oye, H.M. Rong, L. Nygaard, G. SChüssler, J.Kr. Tuset).

Vorzugsweise erfolgt die Rückführung des HS-Gemisches (4/10) oder der getrennten Hochsiederfraktionen (4 bzw. 10) in den Wirbelschichtreaktor (3) über einen Sättiger (6).

Im Sättiger (6) wird das HS-Gemisch einem Teil der HCl (vorzugsweise 10 bis 40 Gew. %) (11) zum Hauptstrom von HCl und zudosiertem metallischem Silicium (12, MGSi) zugemischt, welche dem Wirbelschichtreaktor zur Herstellung von Trichlorsilan zugeführt wird. Diese Mischung wird dem Wirbelschichtreaktor (3) zugeführt.

Die analytische Prüfung der Zuaammensetzung des HS-Gemisches (4) bzw. der Abgaszusammensetzung (7) hat nach mehrtägiger Betriebszeit ergeben, dass Polychlordisiloxane HₙCl₆₋ₙSi₂O (n= 0 - 4) sich um etwa eine Größenordnung angereichert haben, die den Prozess nicht stören. Eine Metallchloridanreicherung war im erfindungsgemäßen Verfahren nicht in einem den Prozess störenden Maße zu messen.

Die folgenden Beispiele dienen der weiteren Erläuterung der Erfindung:

### Beispiel 1: Herstellung Trichlorsilan (Vergleichsbeispiel)

In einem Reaktorsystem, bestehend aus einem Wirbelschichtreaktor (3), einem Staubabtrennungssystem (13) und einem Kondensationssystem (14) (beschrieben in US 4,130,632) wurde metallurgisches Silicium mit einer Reinheit von > 98 % Silicium mit Chlorwasserstoffgas umgesetzt.

Man erhielt nach der Kondensation ein Roh-Silan-Gemisch mit 70 - 90 Gew.% Trichlorsilan, 10 - 29,2 Gew.% Siliciumtetrachlorid, 0,1 - 0,5 % NS (Dichlorsilan und Monochlorsilan) und 0,1 - 0,3 % HS. Weiterhin enthielt das Roh-Silan im ppm-Bereich Metallchloride (z. B. TiCl₄ und AlCl₃).

Es wurden ca. 2 t/h Roh-Silan aus 425 kg/h Silicium und 1750 kg/h HCl erzeugt. Die Zusammensetzung des Roh-Silans betrug 0,35 % Niedersieder (Mono- und Dichlorsilan), 79,3 % Trichlorsilan, 20,1 % Siliciumtetrachlorid sowie 0,25 % HS. Die HS-Fraktion setzte sich aus etwa 50 % Disilanen, 47 % Disiloxanen und ca. 3 % höheren Polychloroligosilanen und Siloxanen zusammen. Es entstanden ca. 5 kg/h HS-Fraktion.

Es mussten damit pro 1000 kg erzeugtes Rohsilan etwa 2,5 kg HS-Fraktion über Hydrolyse entsorgt werden.

### Beispiel 2: Rückspeisung (4) der HS aus dem Abgas (7) der Trichlorsilan Herstellung gemäß Bsp. 1 in die Trichlorsilan Herstellung im Wirbelschichtreaktor (3)

Verfahren zur Herstellung der Rohsilane erfolgte wie in Beispiel 1 beschrieben. Die Abgase des Verfahrens wurden nach der Trennkolonne (1a) in eine Hochsiederkolonne (1c) gegeben. Dabei wurden die HS angereichert. Etwa 20 Gew.% (1 kg/h) der HS-Fraktion wurden abgetrennt und zur HS-Vernichtung (5) geleitet. Die restlichen 4 kg/h der HS-Fraktion wurden in einen beheizbaren Sättiger (6) überführt und von dort mit Hilfe eines HCl-Trägergasstromes (11) in den Wirbelschichtreaktor (3) eingespeist. Die Gesamtmenge der HCl (11+12) wurde hierzu geteilt (90 % wurde direkt (12) in die Wirbelschicht (3) eingespeist, 10 % der HCl-Menge wurde als Trägergas (11) für Beförderung von HS verwendet). Bei der vorgegebenen Reaktionstemperatur wurden die spaltbaren Anteile der HS-Fraktion in Monomere überführt, während sich nichtspaltbare Anteile im Roh-Silan etwas anreichern.

Bezogen auf 1000 kg Rohsilan mussten in diesem Beispiel nur 1,2 kg HS-Fraktion über Hydrolyse entsorgt werden.

### Beispiel 3: Rückspeisung (10) der HS aus dem Abgas (16) der Herstellung von polykristallinem Silicium (2) in die Trichlorsilan Herstellung im Wirbelschichtreaktor (3)

Das Verfahren zur Herstellung des Rohsilans erfolgte gemäß Beispiel 1. Zusätzlich wurden 10 kg/h der HS-Fraktion aus der Polyabscheidung (2) zusammen mit 1/10 der Gesamt-HCl-Menge (11) über den Sättiger (6) in den Wirbelschicht-Reaktor (3) eingespeist.

Überraschend wurde gefunden, dass sich die Zusammensetzung des dabei erhaltenen Rohsilans nicht von demjenigen aus Beispiel 1 unterschied (0,25 % HS-Anteil). D. h. die Polychlordisilane in der HS-Fraktion wandelten sich vollständig in Monomere wie Trichlorsilan oder Siliciumtetrachlorid um.

Es entstanden keine zusätzlichen HS, welche entsorgt werden müssten. Die in der Polyabscheidung (2) anfallenden HS konnten mittels des erfindungsgemäßen Verfahrens nach Kondensation (15) und destillativer Trennung (8) bzw. Anreicherung (9) vollständig über die Rückführung (10) in den Wirbelschichtreaktor (3) zu Trichlorsilan oder Siliciumtetrachlorid recycelt werden.

### Beispiel 4: Rückspeisung der HS aus einem Abgasgemisch 4 und 10

In der Praxis hat es sich als sinnvoll erwiesen, die HS-Fraktionen gemeinsam zu verarbeiten. Die Synthese wurde wie in Beispiel 1 beschrieben durchgeführt. Zusätzlich wurden 4 kg/h HS-Fraktion aus der Hochsiederkolonne (1c) und 10 kg/h HS aus dem Abgas (16) der Polyabscheidung (2) in den Sättiger (6) überführt und dann gemeinsam mit ca. 175 kg/h HCl-Trägergas (11) in den Wirbelschicht-Reaktor (3) eingespeist. Wie in Beispiel 2 reicherten sich die Oligosiloxane im Rohsilan etwas an.

Pro 1000 kg Rohsilan mussten 1,2 kg HS in der HS-Vernichtung (5) mittels Hydrolyse entsorgt werden.

## Patentansprüche

1. Verfahren zur Herstellung von Trichlorsilan durch Umsetzung von metallurgischem Silicium und HCl in einem Wirbelschichtreaktor bei einer Temperatur von 290°C bis 400°C, bei dem eine hochsiedende Verbindung welche aus Silicium, Chlor, ggf. Wasserstoff, Sauerstoff und Kohlenstoff besteht und einen höheren Siedepunkt als Tetrachlosilan aufweist, in den Wirbelschichtreaktor eingespeist wird, **dadurch gekennzeichnet, dass** die hochsiedende Verbindung aus den Abgasen die bei der Herstellung von polykristallinnem Silicium entstehen, stammt.

2. Verfahren gemäß Anspruch 1, **dadurch gekennzeichnet, dass** die hochsiedende Verbindung ein Disilan der Formel H₁Cl₆₋ₙSi₂ (n= 0 - 4) oder ein höheres Oligo(chlor)silan vorzugsweise mit 2 bis 4 Si Atomen oder ein Disiloxan HₙCl₆₋ₙSi₂O (n= 0 - 4) oder ein höheres Siloxan vorzugsweise mit 2 bis 4 Si Atomen einschließlich zyklischer Oligosiloxane oder ein Methylderivat der genannten Verbindungen ist.

3. Verfahren gemäß Anspruch 1 oder gemäß Anspruch 2, **dadurch gekennzeichnet, dass** die Einspeisung der hochsiedenden Verbindung in den Wirbelschichtreaktor über einen Sättiger erfolgt.

## Claims

1. Process for preparing trichlorosilane by reaction of metallurgical silicon and HCl at a temperature of from 290°C to 400°C in a fluidized-bed reactor, in which process a high-boiling compound which consists of silicon, chlorine, possibly hydrogen, oxygen and carbon and has a boiling point higher than that of tetrachlorosilane is fed into the fluidized-bed reactor, **characterized in that** the high-boiling compound originates from the offgases formed in the production of polycrystalline silicon.

2. Process according to Claim 1, **characterized in that** the high-boiling compound is a disilane of the formula HₙCl₆₋ₙSi₂ (n = 0 - 4) or a higher oligo(chloro)silane which preferably has from 2 to 4 Si atoms or a disiloxane HₙCl₆₋ₙSi₂O (n = 0 - 4) or a higher siloxane which preferably has from 2 to 4 Si atoms, including cyclic oligosiloxanes or a methyl derivative of the compounds mentioned.

3. Process according to Claim 1 or according to Claim 2, **characterized in that** the introduction of the high-boiling compound into the fluidized-bed reactor is effected via a saturator.

## Revendications

1. Procédé pour la production de trichlorosilane par mise en réaction de silicium métallurgique et HCl dans un réacteur à lit fluidisé, à une température de 290 °C à 400 °C, dans lequel on introduit dans le réacteur à lit fluidisé un composé à haut point d'ébullition, qui est constitué de silicium, de chlore, éventuellement d'hydrogène, d'oxygène et de carbone et présente un plus haut point d'ébullition que le tétrachlorosilane, **caractérisé en ce que** le composé à haut point d'ébullition provient des gaz rejetés qui sont formés lors de la production de silicium polycristallin.

2. Procédé selon la revendication 1, **caractérisé en ce que** le composé à haut point d'ébullition est un disilane de formule HₙCl₆₋ₙSi₂ (n = 0-4) ou un oligo(chloro)silane supérieur ayant de préférence de 2 à 4 atomes de silicium ou un disiloxane HₙCl₆₋ₙSi₂O (n = 0-4) ou un siloxane supérieur ayant de préférence de 2 à 4 atomes de silicium, y compris des oligosiloxanes cycliques ou un dérivé méthylé des composés cités.

3. Procédé selon la revendication 1 ou selon la revendication 2, **caractérisé en ce que** l'introduction du composé à haut point d'ébullition dans le réacteur à lit fluidisé s'effectue via un saturateur.
